# EUROPÄISCHE PATENTANMELDUNG

(11) **EP 1 544 975 A2**
(43) Veröffentlichungstag der Anmeldung: **22.06.2005**
(21) Anmeldenummer: 04025246.2
(22) Anmeldetag: 23.10.2004
(51) Int. Cl.: H02J 1/10, H02J 7/34

(54) **Energieversorgungssystem**

(30) Priorität: 18.12.2003 DE 10359709
(71) Anmelder: Insta Elektro GmbH, 58511 Lüdenscheid (DE)
(72) Erfinder: Mundinger, Harald, Dipl.-Ing., 58849 Herscheid (DE); Stöhr, Frank Axel, Dipl.-Ing., 42477 Radevormwald (DE)

(57) **Zusammenfassung**

Es wird ein Energieversorgungssystem vorgeschlagen, welches im Wesentlichen aus einer, z.B. über einen Busankoppler abgreifbaren Spannungsquelle besteht, welche angeschlossene Geräte über zumindest einen ersten Spannungszweig mit Energie versorgt. Zu dem Zweck ein Energieversorgungssystem zu schaffen, welches in der Lage ist, kurzzeitig mehr Leistung zur Verfügung zu stellen, als dies dauerhaft möglich ist, um einen kurzzeitig erhöhten Leistungsbedarf solcher Geräte problemlos decken zu können ist zumindest ein, mit einem Energiespeicher versehener zweiter Spannungszweig vorhanden, und wird der Energiespeicher mittels einer Hilfsspannung geladen, welche einen wesentlich höheren Spannungswert als die im ersten Spannungszweig zur Verfügung stehende Spannung aufweist, und ist die im Energiespeicher vorhandene Energie pulsartig von den angeschlossenen Geräten über zumindest einen Tiefsetzsteller entnehmbar.

## Beschreibung

Die vorliegende Erfindung geht von einem gemäß Oberbegriff des Hauptanspruches konzipierten Energieversorgungssystem insbesondere für an Busankoppler anschließbare Geräte der Gebäudesystemtechnik aus.

Derartige Energieversorgungssysteme sind in der Regel dafür vorgesehen, die an den Busankoppler angeschlossenen Geräte, wie z.B. Tastsensoren, Dimmer, Temperatursteller, Fingerprintsensoren, Transponder, Gateways usw. mit der zum Betrieb notwendigen Energie zu versorgen, so dass deren Funktion sichergestellt ist.

Aus der DE 100 11 160 A1 ist ein dem Oberbegriff des Hauptanspruches entsprechendes Energieversorgungssystem insbesondere für an Busankoppler anschließbare Geräte der Gebäudesystemtechnik bekannt geworden. Sollen jedoch über ein solches Energieversorgungssystem an einen Busankoppler angeschlossene Geräte versorgt werden, deren Leistungsaufnahme kurzzeitig über die permanent zur Verfügung stehenden Versorgungsmöglichkeiten hinausgehen, kann es zu Funktionsstörungen sowohl der angeschlossenen Geräte als auch des gesamten Bussystems des Gebäudes kommen.

Der vorliegenden Erfindung liegt deshalb die Aufgabe zugrunde, ein Energieversorgungssystem insbesondere für an Busankoppler anschließbare Geräte zu schaffen, welches in der Lage ist, kurzzeitig mehr Leistung zur Verfügung zu stellen, als dies dauerhaft möglich ist, um einen kurzzeitig erhöhten Leistungsbedarf solcher Geräte problemlos decken zu können.

Diese Aufgabe wird durch die im Hauptanspruch angegebenen Merkmale gelöst. Bei einem solchermaßen ausgebildeten Energieversorgungssystem ist besonders vorteilhaft, dass ein kurzzeitig erhöhter Leistungsbedarf besonders kostengünstig auf einfache Art und Weise abgedeckt werden kann.

Weitere vorteilhafte Ausgestaltungen des erfindungsgemäßen Gegenstandes sind in den Unteransprüchen angegeben. Anhand dreier, in Blockschaltbildern dargestellter Ausführungsbeispiele sei der erfindungsgemäße Gegenstand im Prinzip näher erläutert. Dabei zeigen:
- Fig. 1: prinziphaft ein erstes Ausführungsbeispiel eines solchen Energieversorgungssystems;
- Fig. 2: prinziphaft ein zweites Ausführungsbeispiel eines solchen Energieversorgungssystems;
- Fig. 3: prinziphaft ein drittes Ausführungsbeispiel eines solchen Energieversorgungssystems.

Wie näher aus den Blockschaltbildem hervorgeht, besteht ein solches Energieversorgungssystem im Wesentlichen aus einer, z.B. über einen Busankoppler abgreifbaren Spannungsquelle 1, welche über einen ersten Spannungszweig 2 und über einen zweiten Spannungszweig 3 die Energieversorgung der an den Busankoppler angeschlossenen Geräte 4 sicherstellt.

Wie des weiteren aus den Figuren hervorgeht, ist im zweiten Spannungszweig 3 ein Energiespeicher 5 vorhanden, welcher mittels der im zweiten Spannungszweig 3 zur Verfügung stehenden Hilfsspannung geladen wird. Die Hilfsspannung weist einen wesentlich höheren Spannungswert auf, als die Spannung mit einem Spannungswert von ca. 5 Volt, die über den ersten Spannungszweig 2 zur Verfügung gestellt wird. Pulsartig kann im Bedarfsfall von angeschlossenen Geräten 4 die im Energiespeicher 5 vorhandene Energie entnommen werden, ohne dass dabei eine Belastung des ersten Spannungszweiges 2 erfolgt.

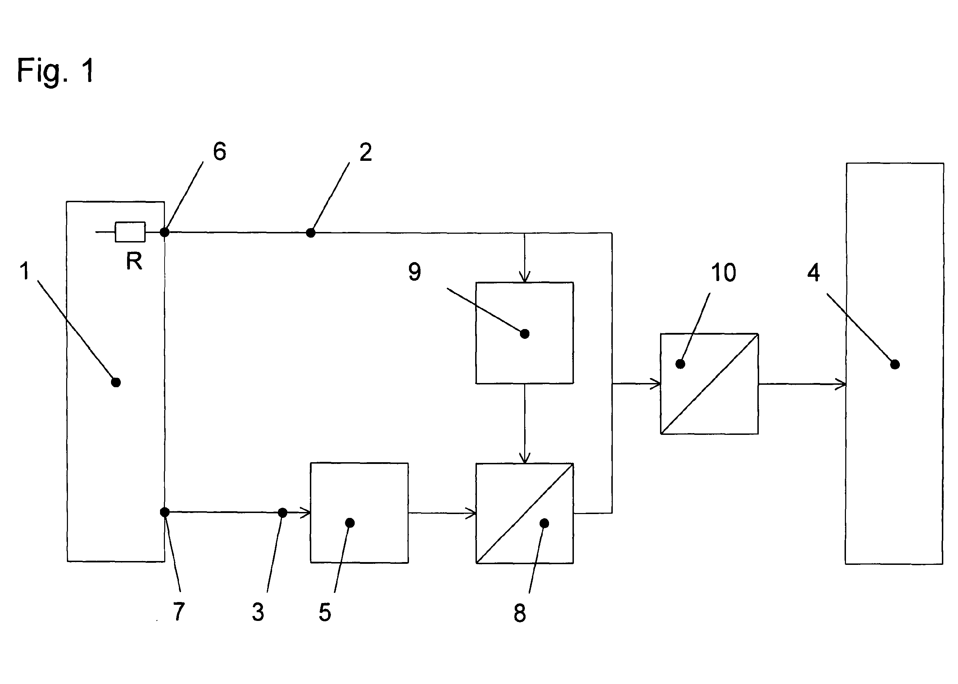

Wie insbesondere aus Fig. 1 hervorgeht, steht der erste Spannungszweig 2 über einen ersten Spannungsanschluss 6 und über einen Widerstand R mit der Spannungsquelle 1 in Verbindung. Über den ersten Spannungsanschluss 6 steht etwa eine Spannung mit einem Spannungswert von 5 Volt für den ersten Spannungszweig 2 zur Verfügung. Der zweite Spannungszweig 3 steht direkt über einen zweiten Spannungsanschluss 7 mit der Spannungsquelle 1 in Verbindung. Über den zweiten Spannungsanschluss 7 wird vorzugsweise eine Hilfsspannung mit einem Spannungswert von ca. 20 Volt für den zweiten Spannungszweig 3 zur Verfügung gestellt. Je nach Ausführung kann über den zweiten Spannungsanschluss 7 jedoch auch eine Hilfsspannung mit einem Spannungswert zwischen 8 Volt und 30 Volt zur Verfügung gestellt werden. Wesentlich ist dabei, dass über den zweiten Spannungszweiges 3 eine Hilfsspannung zur Verfügung gestellt wird, deren Spannungswert wesentlich höher ist, als der Spannungswert der Spannung die über den ersten Spannungszweig 2 zur Verfügung gestellt wird. Der Sollwert des, vom Energiespeichers 5 gespeisten, ersten Tiefsetzsteller 8 wird über ein einerseits mit dem erste Spannungszweig 2 und andererseits mit dem ersten Tiefsetzsteller 8 in Verbindung stehendes Funktionsmodul 9 mit Tiefpass nachgeführt. Somit ist auf einfache Art und Weise sichergestellt, dass der erste Tiefsetzsteller 8 ausgangsseitig immer eine Hilfsspannung zur Verfügung stellt, deren Spannungswert dem Spannungswert der im ersten Spannungszweig 2 zur Verfügung gestellten Spannung entspricht. Der erste Spannungszweig 2 und der zweite Spannungszweig 3 sind in einem vor dem angeschlossenen Gerät 4 angeordneten zweiten Tiefsetzsteller 10 zusammengeführt. Über den zweiten Tiefsetzsteller 10 wird dann letztendlich den angeschlossenen Geräten 4 die zum ordnungsgemäßen Betrieb notwendige Energie zur Verfügung gestellt.

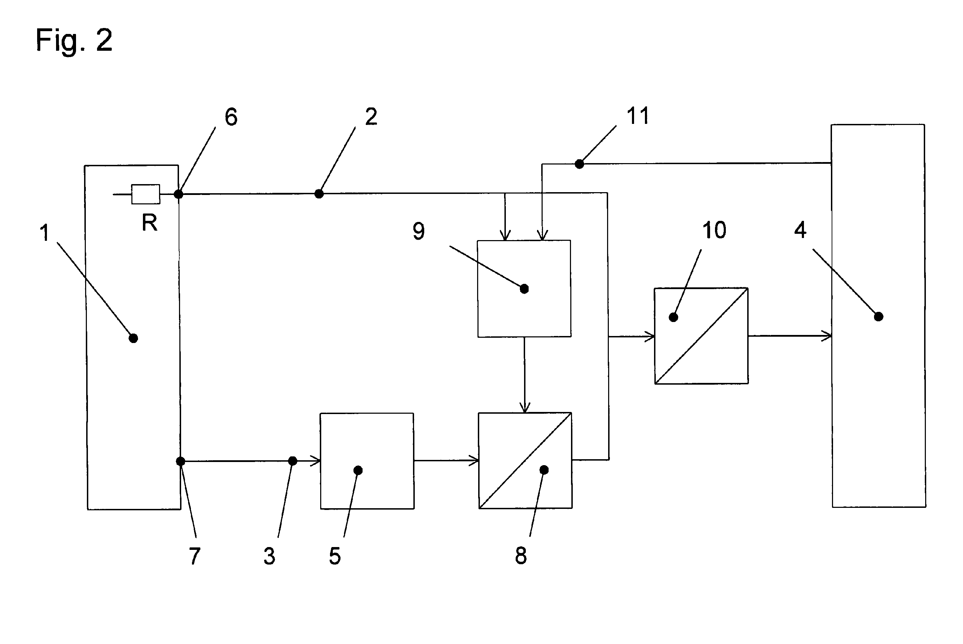

Wie insbesondere aus Fig. 2 hervorgeht, entspricht der Aufbau des dargestellten Energieversorgungssystems im wesentlichen dem vorstehend bereits näher beschriebenen und in Fig. 1 dargestellten Energieversorgungssystem. Der wesentliche Unterschied ist, dass das Funktionsmodul, und dass das angeschlossene Gerät 4 über eine Datenleitung 11 miteinander verbunden sind. Über die Datenleitung 11 können z.B. problemlos Steuersignale ausgetauscht werden, um auch in Abhängigkeit des momentanen Leistungsbedarfs der angeschlossenen Geräte 4 eine Nachführung des Sollwertes des erste Tiefsetzstellers 8 vornehmen zu können.

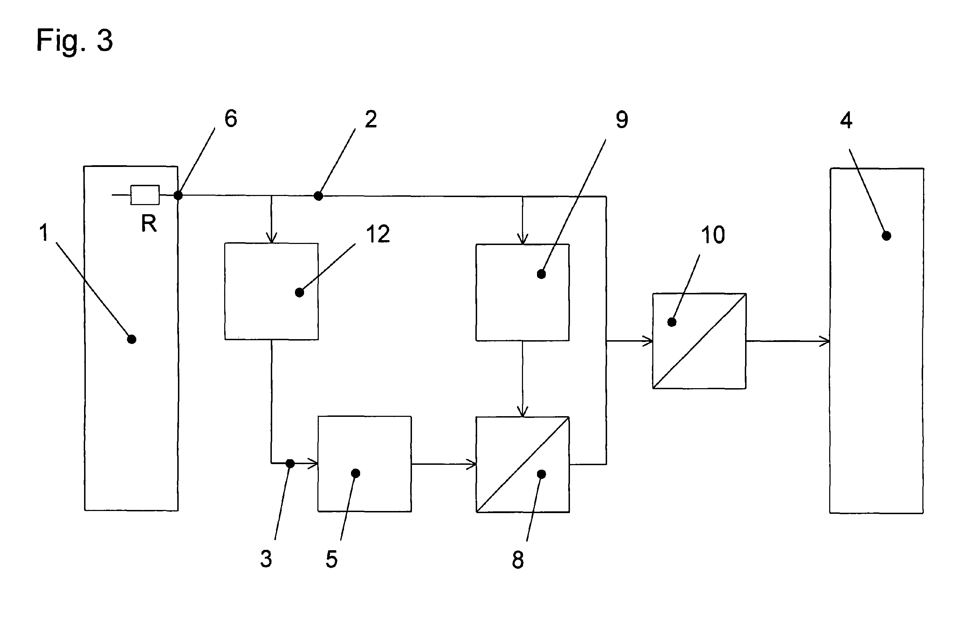

Wie insbesondere aus Fig. 3 hervorgeht, entspricht der Aufbau des dargestellten Energieversorgungssystems im wesentlichen ebenfalls dem vorstehend bereist näher beschriebenen und in Fig. 1 dargestellten Energieversorgungssystem. Der wesentliche Unterschied besteht darin, dass der zweite Spannungszweig 3 mit dem ersten Spannungszweig 2 über einen Hochsetzsteller 12 in Verbindung steht. Die im ersten Spannungszweig 2 zur Verfügung stehende Spannung mit einem Spannungswert von ca. 5 Volt wird durch den Hochsetzsteller auf einen Spannungswert von ca. 20 Volt angehoben. Für den zweiten Spannungszweig 3 bzw. den Ladevorgang des Energiespeichers 5 steht also eine ausreichend hohe Hilfsspannung zur Verfügung. Selbstverständlich kann auch bei diesem Energieversorgungssystem eine - der Einfachheit halber nicht dargestellte - Datenleitung 11 vorgesehen sein, die eine Verbindung zwischen dem Funktionsmodul 9 und dem angeschlossenen Gerät 4 herstellt.

Durch die beschriebenen Energieversorgungssysteme ist es jeweils auf einfache und kostengünstige Art und Weise möglich, den angeschlossenen Geräten 4 bei Bedarf kurzeitig problemlos mehr Leistung zur Verfügung zu stellen, als dies dauerhaft über den ersten Spannungszweig 2 möglich ist. Pulsartig kann im Bedarfsfall von den angeschlossenen Geräten 4 Leistung aus dem Energiespeicher 5 entnommen werden, um einen kurzfristig erhöhten Leistungsbedarf abzudecken. Bei Zuständen mit geringem Leistungsbedarf wird der Energiespeicher 5 dann wieder durch die Hilfsspannung aufgeladen.

## Patentansprüche

1. Energieversorgungssystem insbesondere für an Busankoppler anschließbare Geräte der Gebäudesystemtechnik, wobei dem angeschlossenen Gerät die von der Spannungsquelle zur Verfügung gestellte Spannung zumindest über einen ersten Spannungszweig zugeführt wird, **dadurch gekennzeichnet, dass** zumindest ein, mit einem Energiespeicher (5) versehener zweiter Spannungszweig (3) vorhanden ist, und dass der Energiespeicher (5) mittels einer Hilfsspannung geladen wird, welche einen wesentlich höheren Spannungswert als die im ersten Spannungszweig (2) zur Verfügung stehende Spannung aufweist, und dass die im Energiespeicher (5) vorhandene Energie vom angeschlossenen Gerät (4) über zumindest einen Tiefsetzsteller (8, 10) pulsartig entnehmbar ist.

2. Energieversorgungssystem nach Anspruch 1, **dadurch gekennzeichnet, dass** der Energiespeicher (5) zum Zwecke seiner Aufladung mit einem zweitem Spannungsanschluss (7) der Spannungsquelle (1) des Busankopplers in Verbindung steht.

3. Energieversorgungssystem nach einem der Ansprüche 1 oder 2, **dadurch gekennzeichnet, dass** der Energiespeicher (5) zum Zwecke seiner Aufladung über einen Hochsetzsteller (12) mit dem ersten Spannungszweig (2) und/oder dem zweiten Spannungsanschluss (7) der Spannungsquelle (1) des Busankopplers in Verbindung steht.

4. Energieversorgungssystem nach einem der Ansprüche 1 bis 3, **dadurch gekennzeichnet, dass** der zweite Spannungsanschluss (7) einen wesentlich höheren Spannungswert zur Verfügung stellt, als der erste Spannungsanschluss (6) der Spannungsquelle (1) des Busankopplers und dass der Energiespeicher (5) direkt mit dem zweiten Spannungsanschluss (7) der Spannungsquelle (1) des Busankopplers in Verbindung steht.

5. Energieversorgungssystem nach einem der Ansprüche 1 bis 4, **dadurch gekennzeichnet, dass** der Sollwert des dem Energiespeicher (5) nachgeschalteten ersten Tiefsetzsteller (8) über ein mit dem ersten Spannungszweig (2) in Verbindung stehendes Funktionsmodul (9) nachführbar ist.

6. Energieversorgungssystem nach Anspruch 5, **dadurch gekennzeichnet, dass** das Funktionsmodul (9) mit einem Tiefpass versehen ist.

7. Energieversorgungssystem nach einem der Ansprüche 1 bis 6, **dadurch gekennzeichnet, dass** der Energiespeicher (5) als Kondensator ausgebildet ist.

8. Energieversorgungssystem nach einem der Ansprüche 1 bis 7, **dadurch gekennzeichnet, dass** der erste Spannungszweig (2) und dass der zweite Spannungszweig (3) in einem, vor dem angeschlossenen Gerät (4) angeordneten zweiten Tiefsetzsteller (10) zusammengeführt sind.

9. Energieversorgungssystem nach einem der Ansprüche 1 bis 8, **dadurch gekennzeichnet, dass** dem Funktionsmodul (9) und dem angeschlossenen Gerät (4) eine Signalaustauscheinrichtung zugeordnet ist.

10. Energieversorgungssystem nach Anspruch 9, **dadurch gekennzeichnet, dass** die Signalaustauscheinrichtung mit einer das Funktionsmodul (9) und das angeschlossene Gerät (4) verbindende Datenleitung (11) versehen ist.
